(19) Europäisches Patentamt
European Patent Office
Office européen des brevets

(11) **EP 4 325 373 A1**

(12) **EUROPEAN PATENT APPLICATION**
published in accordance with Art. 153(4) EPC

(43) Date of publication:
**21.02.2024 Bulletin 2024/08**

(21) Application number: **22787596.0**

(22) Date of filing: **14.04.2022**

(51) International Patent Classification (IPC):
***G06F 15/78*** (2006.01)

(52) Cooperative Patent Classification (CPC):
**G06F 7/523; G06F 15/78; G06F 17/16**

(86) International application number:
**PCT/CN2022/086815**

(87) International publication number:
**WO 2022/218374 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2021 CN 202110414133**

(71) Applicant: **Shanghai Cambricon Information
Technology Co., Ltd
Shanghai 201306 (CN)**

(72) Inventors:
• **SUN, Zheng**
  **Beijing 100191 (CN)**
• **LI, Ming**
  **Beijing 100191 (CN)**
• **YU, Yehao**
  **Beijing 100191 (CN)**
• **CHEN, Zhize**
  **Beijing 100191 (CN)**
• **JIANG, Guang**
  **Beijing 100191 (CN)**
• **YU, Xin**
  **Beijing 100191 (CN)**

(74) Representative: **Huang, Liwei
Cäcilienstraße 12
40597 Düsseldorf (DE)**

(54) **METHOD FOR OPTIMIZING MATRIX MULTIPLICATION OPERATION ON SYSTEM ON CHIP, AND RELATED PRODUCT**

(57) The present disclosure discloses a method for optimizing matrix multiplication of an on-chip system and related products. The on-chip system is included in a computing processing apparatus of a combined processing apparatus. The computing processing apparatus includes one or a plurality of integrated circuit apparatuses. The combined processing apparatus further includes an interface apparatus and other processing apparatus. The computing processing apparatus interacts with other processing apparatus to jointly complete a computing operation specified by a user. The combined processing apparatus further includes a storage apparatus. The storage apparatus is connected to the apparatus and other processing apparatus, respectively. The storage apparatus is configured to store data of the apparatus and other processing apparatus. The solution of the present disclosure may reduce the amount of data transmission between an internal device and an external storage apparatus, thus minimizing the I/O bottleneck caused by bandwidth limitations and then improving overall performance of an integrated circuit apparatus.

FIG. 10

**Description**

**CROSS REFERENCE OF RELATED APPLICATION**

The present application claims priority to Chinese Patent Application No. 2021104141333 with the title of "Method for Optimizing Matrix Multiplication of On-Chip System and Related Product" filed on April 16, 2021.

**TECHNICAL FIELD**

The present disclosure generally relates to the field of data computing. More specifically, the present disclosure relates to a method for optimizing matrix multiplication of an on-chip system, a device, and a computer-readable storage medium.

**BACKGROUND**

Matrix multiplication is a very common data operation in the field of scientific computing and data processing. In a currently rapidly developed artificial intelligence field, a large number of data computing are usually involved, including matrix multiplication of various types of data. In deep learning, a research hotspot in the field of artificial intelligence, such as a deep neural network (DNN), a recurrent neural network (RNN) and a "transformer" network used in natural language processing (NLP) on a large scale, many computing tasks involve large-scale matrix multiplication, especially multiplication of two large matrices. It is well known that the larger the data volume and scale involved in the matrix multiplication, the higher the requirement on computing power and memory access performance of a computing platform (especially an on-chip system).

In existing matrix multiplication, a processor such as a central processing unit (CPU) or a graphics processing unit (GPU) is usually used. However, due to the limitation of the capacity of the internal memory resources of the processor, the large amount of data computing caused by large-scale matrix multiplication will result in frequent and large amount of data interaction between the on-chip system of the processor and an external memory. Due to the limited bandwidth of the input/output ("I/O") bus between the processor and the external memory, a serious I/O bottleneck problem will be caused, and the resulting data transmission delay may greatly reduce the efficiency of parallel operations. Further, not only the limited bandwidth of the I/O bus will become the bottleneck of system performance, but also the large amount of I/O access between the processor and the external memory will bring adverse effects on computing and power consumption. Therefore, how to optimize matrix access becomes a very important means to improve the performance of general matrix multiplication.

**SUMMARY**

To at least address the technical issues mentioned above, the present disclosure provides a solution that optimizes matrix multiplication of an on-chip system. Specifically, the present disclosure provides an optimal method for determining matrix splitting in matrix multiplication. By using an optimal splitting method to split a matrix, the matrix multiplication disclosed in the present disclosure significantly reduces the amount of data transmission with an external memory, thereby minimizing the I/O bottleneck caused by the limited bandwidth of the bus, and then improving the operation efficiency of the matrix multiplication. In view of this, the present disclosure provides the foregoing solution in following aspects.

A first aspect of the present disclosure discloses a method for optimizing matrix multiplication of an on-chip system, where the method is implemented by one or more processors and includes: receiving matrix information of a first matrix and a second matrix that are to be split to perform matrix multiplication, where the first matrix is $M$ rows $\times$ $K$ columns and the second matrix is $K$ rows $\times$ $N$ columns; and determining splitting coefficients for splitting the first matrix and the second matrix by minimizing a cost function, where the splitting coefficients include a row count $M_b$ and a column count $K_b$ of matrix blocks obtained after splitting the first matrix and a row count $K_b$ and a column count $N_b$ of matrix blocks obtained after splitting the first matrix, where the cost function is used to determine the cost of transferring matrix data between the on-chip system and an off-chip system to perform the matrix multiplication on the on-chip system, where the cost function is at least based on a data size of the first matrix, a data size of the second matrix, a row count $M$ of the first matrix, a column count $N$ of the second matrix, and the splitting coefficients.

A second aspect of the present disclosure discloses a device configured to optimize matrix multiplication of an on-chip system, including: a processor; and a memory, on which a program instruction for optimizing matrix multiplication of an on-chip system is stored, where when the program instruction is performed by the processor, the device performs the above method.

A third aspect of the present disclosure discloses a computer-readable storage medium, on which a program instruction for optimizing matrix multiplication of an on-chip system is stored, where when the program instruction is performed by a processor, the above method is performed.

A fourth aspect of the present disclosure discloses an on-chip system for performing matrix multiplication, including: a plurality of master computingunits, where each master computing unit includes a plurality of computing sub-units, where each computing sub-unit is configured to perform corresponding matrix multiplication; and a plurality of caches, which are configured to cache matrix data that is to perform matrix multiplication and results associated with matrix multiplication, where the on-chip system is configured to perform matrix multiplication between matrix blocks, and the matrix blocks are obtained by splitting a matrix according to the splitting coefficients of the above method.

A fifth aspect of the present disclosure discloses an integrated circuit apparatus, including the above on-chip system.

A sixth aspect of the present disclosure discloses a board card, including the above integrated circuit apparatus.

By using the method, device, and computer-readable storage medium disclosed above, an optimal splitting method for a matrix participating in matrix multiplication may be determined, thereby significantly optimizing matrix multiplication. Specifically, by constructing a cost function of the cost caused by the transfer of matrix block data between an on-chip system and an off-chip system and aiming to minimize the cost function, the solution of the present disclosure selects optimal splitting coefficients for splitting matrices. Therefore, through matrix multiplication performed based on the optimal splitting coefficients, the solution of the present disclosure may make full use of on-chip resources of the on-chip system and reduce I/O data interaction with an external memory of the off-chip system, thus achieving efficient parallel execution of data transfer and the matrix multiplication. Further, by performing multi-level splitting of large matrices in combination with a hardware architecture, the solution of the present disclosure also simplifies the complexity of the matrix multiplication and supports the matrix multiplication of super-large matrices. In some embodiments, through the above cost function, the solution of the present disclosure may also select an optimal matrix multiplication algorithm from a plurality of candidate matrix multiplication algorithms to realize the efficient execution of the matrix multiplication.

## BRIEF DESCRIPTION OF DRAWINGS

By reading the following detailed description with reference to drawings, the above and other objects, features and technical effects of exemplary implementations of the present disclosure will become easier to understand. In the drawings, several implementations of the present disclosure are shown in an exemplary but not restrictive manner, and the same or corresponding reference numerals indicate the same or corresponding parts.

FIG. 1 is a schematic diagram of matrix splitting according to an embodiment of the present disclosure.
FIG. 2 is a flowchart of a method for optimizing matrix multiplication of an on-chip system according to an embodiment of the present disclosure.
FIG. 3 is an architecture diagram for performing matrix access according to an embodiment of the present disclosure.
FIG. 4 is a schematic architecture diagram of L2 caching area shown in FIG. 3.
FIG. 5 is a schematic architecture diagram of L1 caching area shown in FIG. 3.
FIG. 6a and FIG. 6b are schematic diagrams of matrix block splitting principle according to embodiments of the present disclosure.
FIG. 7 is a structural diagram of an on-chip system that performs matrix multiplication according to an embodiment of the present disclosure.
FIG. 8 is a schematic diagram where a computing sub-unit performs matrix multiplication according to an embodiment of the present disclosure.
FIG. 9 is a flowchart of a method for selecting an optimal matrix multiplication algorithm according to an embodiment of the present disclosure.
FIG. 10 shows a structural diagram of a combined processing apparatus according to an embodiment of the present disclosure.
FIG. 11 is a schematic structural diagram of a board card according to an embodiment of the present disclosure.

## DETAILED DESCRIPTION OF EMBODIMENTS

Technical solutions in embodiments of the present disclosure will be described clearly and completely hereinafter in combination with drawings in the embodiments of the present disclosure. Obviously, the description below is intended to discuss various exemplary embodiments of the present disclosure and is not intended to be an exhaustive description of embodiments of the present disclosure. All other embodiments obtained by those skilled in the art based on the embodiments of the present disclosure without creative efforts shall fall within the scope of protection of the present disclosure.

The inventor of the present disclosure finds that when two matrices are split in an arbitrary form to perform matrix multiplication, this splitting action does not significantly change the total computing amount of multiplication and addition in the matrix multiplication. However, this splitting action significantly changes the amount of I/O between an on-chip system and an off-chip system. Therefore, optimizing the amount of I/O between the on-chip system and the off-chip system is a key to improve matrix multiplication performance. In view of this, in order to improve the performance of data access between the on-chip system and the off-chip system in the matrix multiplication, increase the operation efficiency of the matrix multiplication, and reduce operation cost, the present disclosure proposes a solution for optimizing matrix multiplication, which involves determining splitting coefficients for splitting a large matrix.

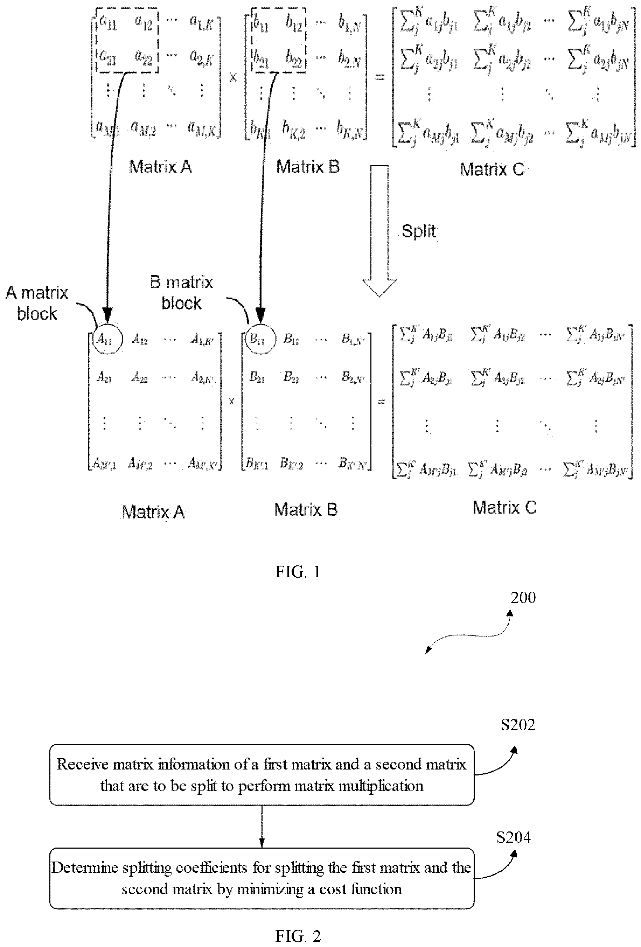

As far as the splitting of the matrix is concerned, as is known to those skilled in the art, when two large matrices are multiplied, the large matrices may be considered to be split into blocks, and each block ("matrix block" in the context of the present disclosure) is regarded as an element of the matrix, and the matrix multiplication is performed on the basis of that element. By such splitting, general matrix multiplication may be converted into block matrix multiplication. As such, multiplication between large matrices may be made clearer and more explicit, thus greatly simplifying computing. Further, considering that storage resources and computing resources of an on-chip system of a computing device are very limited, block matrix multiplication is also an important means to solve the general matrix multiplication problem of the on-chip system. By splitting the large matrix according to the on-chip resources of the on-chip system in advance, the on-chip system may only multiply two matrix blocks obtained after splitting each time, so that the matrix multiplication may be adapted to the limited storage resources and computing resources. The following takes FIG. 1 as an example to illustrate the above matrix splitting.

FIG. 1 is a schematic diagram of splitting a matrix according to an embodiment of the present disclosure, where an upper part shows matrices before splitting, and a lower part shows matrices after splitting, as shown by arrows in the figure. Specifically, FIG. 1 shows that matrix multiplication is performed on a matrix A ("first matrix" of the present disclosure) and a matrix B ("second matrix" of the present disclosure), thus obtaining a matrix C as a result matrix. In order to implement matrix multiplication on an on-chip system, the matrix A and the matrix B shown in the upper part of FIG. 1 may be split, where a grid box in the matrix A and the matrix B represents an exemplary matrix block. As such, a matrix block $A_{11}$ (composed of elements including an, $a_{12}$, $a_{21}$, $a_{22}$, and the like) of the matrix A and a matrix block $B_{11}$ (composed of elements including $b_{11}$, $b_{12}$, $b_{21}$, $b_{22}$, and the like) of the matrix B may be obtained as shown in the lower part of the figure, where each matrix block acts as a new element in the split matrix. After such splitting, general matrix multiplication in the upper part of FIG. 1 may be converted into block matrix multiplication shown in the lower part of FIG. 1, which is $C_{M'\times N'} = A_{M'\times K'} * B_{K'\times N'}$, where the block matrix multiplication may be expressed by a following formula:

$$C_{ij} = \sum_{k=1}^{k=K'} A_{ik} \times B_{kj} \qquad (1),$$

where

$$0 < i <= M', \text{ and } 0 < j <= N'.$$

For ease of description, in the context of the present disclosure, each matrix block of the matrix A, the matrix B, and the matrix C after splitting is represented as: $A^{block}$(whose size is $M_b$ rows $*K_b$ columns), $B^{block}$(whose size is $K_b$ rows $*N_b$ columns), and $C^{block}$(whose size is $M_b$ rows $*N_b$ columns). Based on this, the present disclosure proposes a solution for determining an optimal matrix block to achieve optimal splitting (or block) of the matrix. Through the solution of the present disclosure, the above $M_b$, $K_b$, and $N_b$ may be determined. The first matrix and the second matrix are split by using the determined $M_b$, $K_b$ and $N_b$ (which are splitting coefficients in the context of the present disclosure). The solution of the present disclosure may simplify the matrix multiplication, minimize the I/O bottleneck caused by the bandwidth limitation of the on-chip system, and then improve the operation efficiency of the matrix multiplication.

FIG. 2 is a flowchart of a method 200 for optimizing matrix multiplication of an on-chip system according to an embodiment of the present disclosure. As is well known to those skilled in the art, the on-chip system is usually a complete system integrated on a single chip. This system may generally include various units, such as a system-on-chip control logic unit, a microprocessor/micro-controller central processing unit (CPU) kernel unit, an embedded memory unit, and an interface unit for communicating with an off-chip system. In the context of the present disclosure, the on-chip system described herein may be a system-on-chip that supports matrix multiplication, including a plurality of master computing units for performing matrix multiplication and a memory for storing matrix data and matrix multiplication results. According to the context of the present disclosure, the plurality of master computing units may be connected in turn to form a data transfer loop, and each master computing unit may include a plurality of computing sub-units, thereby achieving matrix splitting at the master computing unit level and quadratic matrix splitting at the computing sub-unit level, which are multilevel matrix splitting. Based on this, it may be understood that splitting coefficients disclosed herein are also related to the number of master computing units of the on-chip system and the number of computing sub-units contained in each master unit. The exemplary connection and arrangement of the master computing units and the computing sub-units are described in detail later in conjunction with drawings.

As shown in FIG. 2, the method 200 for optimizing the matrix multiplication of the on-chip system of the present disclosure includes: in step S202, receiving matrix information of a first matrix (such as the matrix A in FIG. 1) and a second matrix (such as the matrix B in FIG. 1) that are to be split to perform matrix multiplication. According to different implementations, the above matrix information may include a data size and data information of a matrix. For example, the matrix information may indicate that the first matrix is a large matrix with $M$ rows * $K$ columns and the second matrix is a large matrix with $K$ rows * $N$ columns. Further, the matrix information includes a data size of each element in the first matrix and/or the second matrix (for example, the data size may be in bits or bytes). It may be understood that since splitting is required, $M$, $K$, and $N$ may represent relatively large positive integers, such as 256, 512, 1024, or 2048, so that the solution disclosed herein may be applied to splitting and multiplication of large matrices.

In step S204, splitting coefficients for splitting the first matrix and the second matrix are determined by minimizing a cost function. In an embodiment, the above splitting coefficients may include a size of a matrix block ("block") after splitting, such as a row count $M_b$ and a column count $K_b$ of matrix blocks obtained after splitting the first matrix and a row count $K_b$ and a column count $N_b$ of matrix blocks obtained after splitting the second matrix.

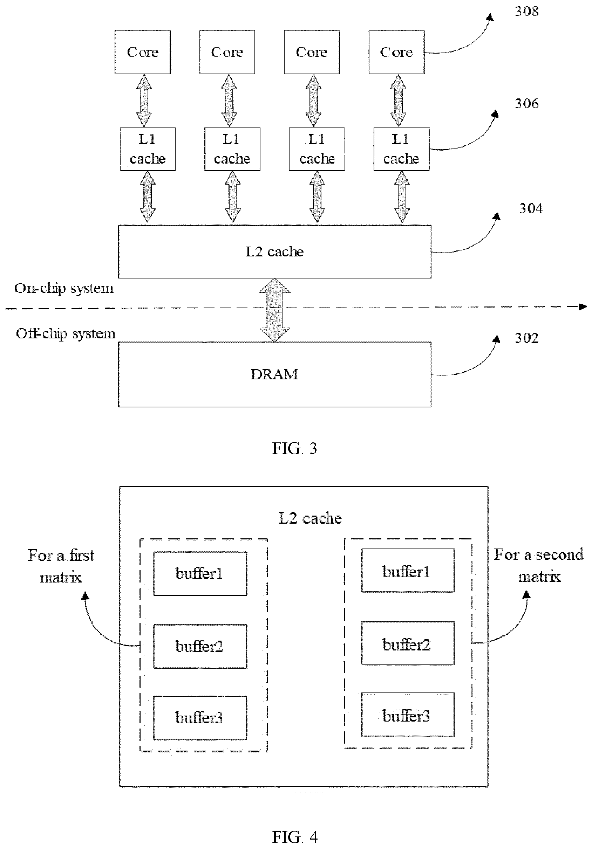

According to the embodiment of the present disclosure, the above cost function is used to determine (or measure) the cost of transferring matrix data between the on-chip system and an off-chip system (as shown in FIG. 3) to perform the matrix multiplication on the on-chip system. In an implementation scenario, the on-chip system may be configured with on-chip cache memories 304 and 306 for storing matrix blocks. Correspondingly, the off-chip system may be configured with a global memory 302, which may transfer various types of data including matrix blocks to the on-chip cache memories through an I/O interface. In a scenario, the global memory may be a dynamic random access memory ("DRAM"), such as a double rate synchronous ("DDR") dynamic random access memory.

Based on the use purpose of the above cost function, the present disclosure proposes to construct the expression form of the cost function at least based on a data size of the first matrix, a data size of the second matrix, a row count $M$ of the first matrix, a column count $N$ of the second matrix, and splitting coefficients ($M_b$, $K_b$, and $N_b$ to be determined in the solution of the present disclosure).

As an example, the cost function of the present disclosure may be expressed as:

$$\text{cost}\,(M, K, N; M_b, K_b, N_b) = \min\left(\left\lceil\frac{M}{M_b}\right\rceil \times B_{size} + \left\lceil\frac{N}{N_b}\right\rceil \times A_{size}\right) \qquad (2),$$

where

$A_{size}$ represents a total data size of a matrix A (which is the first matrix of the present disclosure), $B_{size}$ represents a total data size of a matrix B (which is the second matrix of the present disclosure), and "⌈⌉" represents a rounding up operation. When dw(A) is used to represent a size (in bits or bytes) of each data element in the matrix A and dw(B) is used to represent a size (in bits or bytes) of each data element in the matrix B, $A_{size}$ in the above formula (2) may be represented as $A_{size} = M \times K \times dw(A)$, and $B_{size}$ in the above formula (2) may be represented as $B_{size} = N \times K \times dw(B)$.

Based on the above equivalent substitution of $A_{size}$ and $B_{size}$, the cost function of the formula (2) may be further expressed as:

$$\text{cost}\,(M, K, N; M_b, K_b, N_b) = \min\left(\left\lceil\frac{M}{M_b}\right\rceil \times N \times K \times dw(B) + \left\lceil\frac{N}{N_b}\right\rceil \times M \times K \times dw(A)\right)(3).$$

Further, the cost function may be expressed as (K in the formula (3) is omitted):

$$\text{cost}\,(M, K, N; M_b, K_b, N_b) = \min\left(\left\lceil\frac{M}{M_b}\right\rceil \times N \times dw(B) + \left\lceil\frac{N}{N_b}\right\rceil \times M \times dw(A)\right) \,(4).$$

In an embodiment, considering the impact of loading matrix blocks from a large matrix on the overall time consumption, the solution of the present disclosure also proposes to incorporate a bandwidth utilization coefficient into the cost function, where the bandwidth utilization coefficient equals to a ratio between an equivalent bandwidth when the matrix blocks are loaded from the off-chip system at a predetermined data length and a total bandwidth between the on-chip system and the off-chip system. For example, a bandwidth utilization coefficient $\gamma$ (L) may be added to the cost function expressed in the formulas (1)-(4) above, which equals to a ratio between an equivalent bandwidth of loading the matrix blocks segment by segment at a data length "L" (such as every L element in a matrix block) and a full bandwidth. Here, the equivalent bandwidth is the inverse of the time taken to load one matrix block segment by segment according to a certain data length, while the full bandwidth refers to the total bandwidth of data transmission between the on-chip system and the off-chip system, which is approximately equal to the inverse of the time taken to load the matrix blocks from the off-chip system to the on-chip system continuously at one time.

By introducing the bandwidth utilization coefficient mentioned above, the cost function in the formula (1), for example, may be further expressed as follows:

$$cost(M, K, N; \ M_b, K_b, N_b) = \left\lceil \frac{M}{M_b} \right\rceil \times B_{size} \times \gamma(ldb_b) + \left\lceil \frac{N}{N_b} \right\rceil \times A_{size} \times \gamma(lda_b)$$

$$(5).$$

In the formula (5), $lda$ represents a leading dimension of the matrix A, and $ldb$ represents a leading dimension of the matrix B ("leading dimension" is abbreviated as "$ld$"), where the leading dimension refers to a row or column width of a matrix when the matrix is stored on an off-chip system in either row-major or column-major order storage format. In the formula (5), $lda_b$ represents a leading dimension of a matrix block obtained after splitting the matrix A; and $ldb_b$ represents a leading dimension of a matrix block obtained after splitting the matrix B. For example, when the matrix is stored row by row in the off-chip system, the matrix is in row-major order, and the leading dimension of the matrix is the row width of the matrix (which is the number of column elements). Similarly, when the matrix is stored column by column in the off-chip system, the matrix is in column-major order, and the leading dimension of the matrix is the column width of the matrix (which is the number of row elements).

Further, $lda_b$ represents a splitting granularity of the matrix A in the leading dimension, and $ldb_b$ represents a splitting granularity of the matrix B in the leading dimension, where the splitting granularity refers to the number of elements when the matrix block is split in the leading dimension. For example, when the matrix is stored in the off-chip system in row-major order and neither the matrix A nor the matrix B is transposed, $lda_b=K_b$ and $ldb_b=N_b$; and when the matrix is stored in the off-chip system in row-major order, the matrix A is not transposed, and the matrix B is transposed, $lda_b=K_b$ and $ldb_b=K_b$. Based on this, similar to the above description of the bandwidth utilization coefficient $\gamma$ (L), in the formula (5), "$\gamma$ ($ldb_b$)" represents a ratio between an equivalent bandwidth of $ldb_b$ and a full bandwidth, where the equivalent bandwidth of $ldb_b$ is the inverse of the time taken to load one matrix block segment by segment at a data length (such as $N_b$) of $ldb_b$. Similarly, in the formula (5), "$\gamma$ ($lda_b$)" represents a ratio between an equivalent bandwidth of $lda_b$ and a full bandwidth, where the equivalent bandwidth of $lda_b$ is the inverse of the time taken to load one matrix block segment by segment at a data length (such as $K_b$) of $lda_b$.

Although not shown in FIG. 2, in an embodiment, in determining the splitting coefficients by minimizing the cost function, the method 200 may also include creating search space used for minimizing the cost function, so that the splitting coefficients are determined by using the search space. In an embodiment, creating the search space used for minimizing the cost function may include dividing a high-speed buffer (or a cache memory) of the on-chip system and creating the search space according to a division result. Here, the high-speed buffer is configured to store split matrix blocks and matrix multiplication results obtained by performing matrix multiplication on the split matrix blocks. To facilitate the understanding of storage division of the on-chip system disclosed in the present disclosure, the related description will be made in conjunction with FIG. 3.

FIG. 3 is an architecture diagram for performing matrix access according to an embodiment of the present disclosure. As shown in FIG. 3, the architecture of the present disclosure includes an on-chip system and an off-chip system. For simplicity purposes, only a global memory DRAM 302 is shown by example in the off-chip system. In loading a matrix block, the DRAM may transfer data with a L2 cache 304 through a DDR interface. For example, a matrix block that is to perform matrix multiplication is divided into matrix sub-blocks and then loaded into the L2 cache 304. In an embodiment, the L2 cache 304 may be a shared memory of the on-chip system, which is shared by a plurality of master computing units.

Further, the L2 cache 304 may transfer data with a plurality of L1 caches 306, so that atomic matrices obtained by splitting the matrix block again are transferred to the L1 caches 306 accordingly. In the context of the present disclosure, an atomic matrix may be viewed as a minimum matrix unit that performs matrix multiplication supported by a computing sub-unit. Then, a computing core 308 (which is the above computing sub-unit) may acquire the atomic matrices from the L1 caches 306 to perform matrix multiplication between the atomic matrices. In this scenario, the L1 caches 306 may be viewed as private storage areas for each computing core 308. According to the solution of the present disclosure, the plurality of computing sub-units may form a computing master unit. For example, four computing cores 308 in FIG.

3 may form one computing master unit of the present disclosure.

Based on the above description, those skilled in the art may understand that the on-chip system disclosed herein may include multiple levels of caches. Therefore, the L2 cache 304 shown in FIG. 3 may be viewed as a first level of cache, and the L1 cache 306 may be viewed as a second level of cache. Based on this, the method of the present disclosure may include creating search sub-space associated with each level of cache according to a predetermined matrix multiplication algorithm that is used to perform matrix multiplication. In an implementation scenario, corresponding first search sub-space and second search sub-space may be created according to the first level of cache (such as the L2 cache 304) and the second level of cache (such as the L1 cache 306).

In view of the above scenario, the method 200 of the present disclosure may further include: creating the first search sub-space according to settings of a plurality of first high-speed buffers in the first level of cache, where the plurality of first high-speed buffers are configured to store matrix sub-blocks obtained by splitting a matrix block and intermediate operation results obtained by performing matrix multiplication on the matrix sub-blocks; and creating the second search sub-space according to settings of a plurality of second high-speed buffers in the second level of cache, where the plurality of second high-speed buffers are configured to store atomic matrices obtained by splitting a matrix sub-block and intermediate operation results obtained by performing matrix multiplication on the atomic matrices.

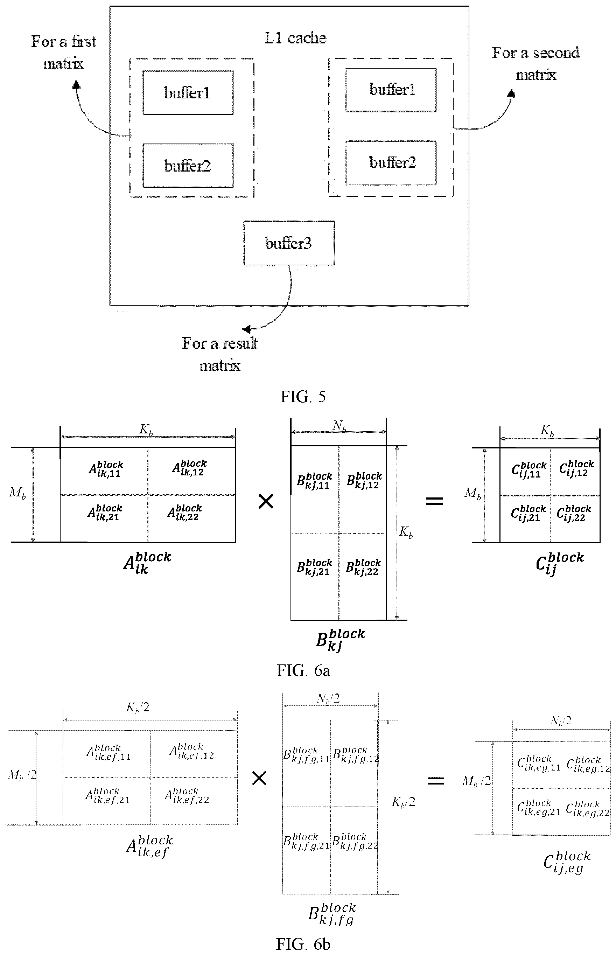

FIG. 4 and FIG. 5 are used as examples to discuss how to create the search space of the present disclosure based on two levels of caches. As shown in FIG. 4 and FIG. 5, the two levels of caches are a L2 cache and a L1 cache (the L2 cache and the L1 cache shown in FIG. 3) respectively, and it is assumed that "cannon" algorithm is used to accelerate matrix multiplication.

First, three separate high-speed buffers may be set up on the L2 cache 304 for a matrix A and a matrix B respectively, which are a buffer1, a buffer2, and a buffer3 shown in FIG. 4. For use purposes, the buffer1 may be configured to receive data sent by other master computing units, the buffer2 may load matrix data from a global memory (such as the DRAM shown in FIG. 3), and the buffer3 is provided to a master computing unit for transferring data to the L1 cache to enable a computing sub-unit to perform real-time computing and save intermediate results in the L1 cache. Based on the foregoing arrangement, considering that matrix blocks (such as the above $A^{block}$, $B^{block}$, and $C^{block}$) are respectively split into $P_1$ pieces in $M$, $K$, and $N$ dimensions (row and column directions of two matrices) according to a first level of cannon algorithm, thus forming $P_1$ matrix sub-blocks, a restriction on the L2 cache may be expressed by a formula (6):

$$\left[ \mathrm{dw}(A) \frac{M_b}{P_1} \frac{K_b}{P_1} + \mathrm{dw}(B) \frac{N_b}{P_1} \frac{K_b}{P_1} \right] \times 3 < Space_{L2} \tag{6}$$

where

$Space_{L2}$ represents storage capacity of the L2 cache 304. The above formula (6) is the above first search sub-space, and the present disclosure searches for suitable $M_b$, $K_b$ and $N_b$ when the formula (6) is satisfied. In addition, it should be noted that the above "$P_1$" is also related to the setup of the master computing unit of the on-chip system. For example, when the on-chip system includes four master computing units, at this time, a value of "$P_1$" is 2, which means that each matrix block is respectively split into two pieces in the $M$, $K$, and $N$ dimensions, so that one matrix block is split into four matrix sub-blocks. Similarly, when the on-chip system includes nine master computing units, at this time, a value of "$P_1$" is 3, which means that each matrix block is respectively split into three pieces in the $M$, $K$, and $N$ dimensions, so that one matrix block is split into nine matrix sub-blocks.

It may be understood that the above first search sub-space is determined after considering cannon algorithm that is used for matrix multiplication. More generally, for any matrix multiplication algorithm, the present disclosure proposes that $S_{10}$, $S_{11}$, and $S_{13}$ separate buffers may be set up on the L2 cache respectively for $A^{block}$ of a first matrix, $B^{block}$ of a second matrix, and $C^{block}$ of a result matrix, and matrix blocks may be respectively split into $P_{10}$, $P_{11}$, and $P_{12}$ respectively in the $M$, $K$, and $N$ dimensions according to matrix multiplication algorithm. Then, a restriction on the L2 cache (which is the first search sub-space of the present disclosure) may be expressed by a formula (7):

$$\mathrm{dw}(A)S_{10} \frac{M_b}{P_{10}} \frac{K_b}{P_{11}} + \mathrm{dw}(B)S_{11} \frac{N_b}{P_{12}} \frac{K_b}{P_{11}} + \mathrm{dw}(C)S_{12} \frac{M_b}{P_{10}} \frac{N_b}{P_{12}} < Space_{L2}$$

$$\tag{7}$$

It may be known that when 0 (which is $S_{13}$=0) piece of buffer is set up for $C^{block}$ according to the formula (7) (which means that no buffer used for storing a result matrix is set up on the L2 cache), and matrix blocks are respectively split into $P_1$, $P_1$, and $P_1$ (which is $P_{10}=P_{11}=P_{12}=P_1$) respectively in the $M$, $K$, and $N$ dimensions according to matrix multiplication algorithm, the first search sub-space expressed by the formula (7) is converted to the first search sub-space expressed by the formula (6). Therefore, the formula (6) may be viewed as a special case of the formula (7).

After the above operation of determining the first search sub-space, the present disclosure sets a plurality of buffers on the L1 cache according to cannon algorithm to determine the second search sub-space of the present disclosure. Therefore, the present disclosure proposes that two separate buffers, which are the buffer1 and buffer2 shown in FIG. 5, may be set up on the L1 cache for the matrix A and the matrix B, respectively, to be used for pipeline operations of matrix multiplication of atomic matrices (which are obtained by splitting the matrix sub-block again). In the case of pipeline operations, the buffer1 and buffer2 may alternate between receiving the atomic matrices and participating in the operation. Next, one separate buffer is set up for a matrix C that resides on the L1 cache, which is the buffer3 shown in FIG. 5, to be used for storing intermediate results obtained by performing matrix multiplication between the atomic matrices. Similar to the determination of the first search sub-space, on the basis of the first level of cannon algorithm (for example, the matrix blocks $A^{block}$, $B^{block}$, and $C^{block}$ are split into $P_1$ pieces in the $M$, $K$, and $N$ dimensions to obtain the matrix sub-blocks disclosed in the present disclosure), each of the previously split matrix sub-blocks is further split into $P_0$ respectively in the $M$, $K$, and $N$ dimensions according to a second level of cannon algorithm to obtain the atomic matrices of the present disclosure. Based on this, a restriction on the L1 cache may be expressed by a formula (8):

$$\left[ \mathrm{dw(A)} \frac{M_b}{P_0 P_1} \frac{K_b}{P_0 P_1} + \mathrm{dw(B)} \frac{N_b}{P_0 P_1} \frac{K_b}{P_0 P_1} + \mathrm{dw(C)} \frac{M_b}{P_0 P_1} \frac{N_b}{P_0 P_1} \right] \times 2 < Space_{L_1} \tag{8},$$

where

$Space_{L1}$ represents storage capacity of the L1 cache. The formula (8) is the above second search sub-space, and the present disclosure searches for suitable $M_b$, $K_b$, and $N_b$ when the formula (8) is satisfied. In addition, it should be noted that similar to the above "$P_1$", "$P_0$" is also related to the setup of the computing sub-unit of the on-chip system. For example, when each master computing unit of the on-chip system includes four computing sub-units, at this time, a value of "$P_0$" is 2, which means that each matrix sub-block is split into two pieces respectively in the $M$, $K$, and $N$ dimensions, so that one matrix sub-block is split into four atomic matrices. Similarly, when each master computing unit includes nine computing sub-units, at this time, a value of "$P_0$" is 3, which means that each matrix sub-block is split into three pieces respectively in the $M$, $K$, and $N$ dimensions, so that one matrix sub-block is split into nine atomic matrices.

It may be understood that the above second search sub-space is determined after considering cannon algorithm that is used for matrix multiplication. More generally, for any matrix multiplication algorithm, the present disclosure proposes that $S_{00}$, $S_{01}$ and $S_{03}$ separate buffers may be set up on the L1 cache respectively for $A^{block}$ of a first matrix, $B^{block}$ of a second matrix, and $C^{block}$ of a result matrix, and on the basis of arrangement of the L2 cache, the above matrix sub-blocks may be respectively split into $P_{00}$, $P_{01}$, and $P_{02}$ again respectively in the $M$, $K$, and $N$ dimensions according to algorithm. Then, a restriction on the L1 cache (which is the second search sub-space of the present disclosure) may be expressed by a formula (9):

$$\mathrm{dw(A)}S_{00} \frac{M_b}{P_{10}P_{00}} \frac{K_b}{P_{11}P_{01}} + \mathrm{dw(B)}S_{01} \frac{N_b}{P_{12}P_{02}} \frac{K_b}{P_{11}P_{01}} + \mathrm{dw(C)}S_{02} \frac{M_b}{P_{10}P_{00}} \frac{N_b}{P_{12}P_{02}} < Space_{L1} \tag{9}.$$

Similar to a case where the formula (6) may be viewed as a special case of the formula (7), the formula (8) may be viewed as a special case of the formula (9). For example, when $P_{10}=P_{11}=P_{12}=P_1$, $P_{00}=P_{01}=P_{02}=P_0$, and $S_{00}=S_{01}=S_{03}=2$, the second search sub-space expressed by the formula (9) is converted to the second search sub-space expressed by the formula (8). Therefore, the formula (8) may be viewed as a special case of the formula (9).

The above details the search space of the present disclosure in combination with FIG. 4 and FIG. 5. After determining the above search space, determining the splitting coefficients by minimizing the cost function may include determining search strides used to search the search space, where the search strides include $\Delta m$, $\Delta k$, and $\Delta n$ respectively associated with the $M$, $K$, and $N$ dimensions. Further, a search algorithm may be used to search in the search space with the search strides to determine $M_b$, $K_b$, and $N_b$ used for minimizing the cost function.

In an embodiment, the above search strides of the present disclosure may be determined by considering following two factors:

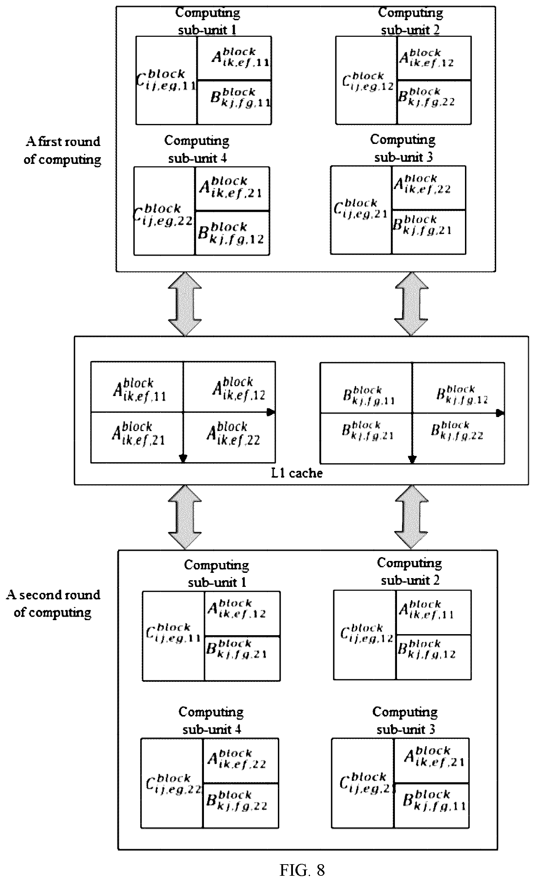

(i) determining a splitting size ("tiling size") of a matrix to be multiplied according to computing power of each of the plurality of computing sub-units (such as the "core" in FIG. 3 or the computing sub-unit in FIG. 8) of the on-chip system. In the solution of the present disclosure, the above computing power involves a matrix size that the computing sub-unit may support in the matrix multiplication, which is a size of the atomic matrix of the present disclosure. In the scenario of the two levels of cannon algorithm mentioned above, here, the splitting size refers to a size of the first or second matrix of the present disclosure that satisfies matrix multiplication requirements of the computing sub-unit after a second level of splitting. Moreover, the atomic matrices obtained after the second level of splitting may be stored in the above L1 cache. Depending on different hardware architectures and matrix multiplication algorithms, splitting sizes supported by the computing sub-units may be different. For example, depending on different scenarios, the splitting sizes may be $(8 \times 8)$, $(16 \times 16)$, or $(16*V) \times (16*V)$, where "*" represents a multiplication sign, and V is a positive integer greater than 1. In a scenario, assuming that the splitting size supported by the computing sub-unit is $(16 \times 16)$, then when the storage space of the L1 cache is relatively large, a matrix with a size of $((16*V) \times (16*Q))$ may also be stored on the L1 cache, where Q is a positive integer greater than 1. When matrix multiplication is performed, a matrix with a size of $(16 \times 16)$ may be read at a time from the L1 cache described above to perform the matrix multiplication.

Based on the above description, it may be considered to respectively align the $K$ and $N$ dimensions of the matrix A and the matrix B to some relatively small positive integers $e_K$ and $e_N$. In other words, computable matrix sizes on the computing sub-unit are integer multiples of $e_K$ and $e_N$ in the $K$ and $N$ dimensions, respectively. In different application scenarios, $e_K$ and $e_N$ may be taken from values such as 4, 8, 16, 32, or 64, depending on the computing power of the computing sub-unit. Assuming that there is no alignment restriction described above for the $M$ dimension, and considering that the matrix blocks are split between and within the master computing units according to cannon algorithm, the search strides $\Delta m, \Delta k,$ and $\Delta n$ on the row and column dimensions of $M, K,$ and $N$ satisfy following equation conditions, where $P_0$ and $P_1$ have the same meaning as in the formula (8).

$$\Delta n = n' \times P_1 \times P_0 \times e_N \qquad (10);$$

$$\Delta k = k' \times P_1 \times P_0 \times e_K, \qquad (11);$$

$$\Delta m = m' \times P_1 \times P_0, \qquad (12).$$

More generally, computable matrix sizes on the computing sub-unit are integer multiples of $e_M, e_K,$ and $e_N$ in the $M, K$ and $N$ dimensions, respectively. When it is considered to split and store the matrix blocks in the two levels of storage space including the L1 cache and the L2 cache, the search strides $\Delta m, \Delta k$ and An on the row and column dimensions of $M, K$ and $N$ satisfy following equation conditions, where $P_{12}, P_{11}, P_{10}, P_{00}, P_{01}$ and $P_{02}$ have the same meaning as in the formula (9).

$$\Delta n = n' \times P_{12} \times P_{02} \times e_N, \qquad (13);$$

$$\Delta k = k' \times P_{11} \times P_{01} \times e_K, \qquad (14);$$

$$\Delta m = m' \times P_{10} \times P_{00} \times e_M \qquad (15),$$

where
$n', k'$ and $m'$ are any positive integer in the formulas (10)-(15).

(Ii) leading dimensions *lda* and *ldb* of the matrix are determined according to storage formats (such as column-major or row-major) and transposition methods of the matrix A and the matrix B, and at the same time, search strides of the matrix A and the matrix B in the leading dimensions are determined according to performance of the DRAM or DDR (such as the off-chip system or the global memory described in the present disclosure) for uploading and downloading data.

In a scenario, assuming that both the matrix A and the matrix B are stored in the DDR in row-major order, and neither the matrix A nor the matrix B is transposed, the leading dimension of the matrix A is $K$, which refers to $lda=K$, and the leading dimension of the matrix B is $N$, which refers to $ldb=N$, in the case of row-major order, if the matrix B is required to be transposed, then the leading dimension of the matrix B is $K$, which refers to $ldb=K$. If both the matrix A and the matrix B are stored in the DDR in column-major order, related situation is exactly the opposite of that in row-major order. For example, when neither the matrix A nor the matrix B is required to be transposed, then the leading dimension of the matrix A is $M$, which refers to $lda=M$, and the leading dimension of the matrix B is $K$, which refers to $ldb=K$.

When it is considered that the L2 cache or the L1 cache loads data from the DDR each time, assuming that the highest bandwidth utilization (which is the segment-by-segment loading described above) is achieved when a data size of one load is "L", splitting granularity of the matrix A and the matrix B in the leading dimensions may be expressed in units of "L". For example, in the case of row-major order, when neither the matrix A nor the matrix B is required to be transposed, the leading dimension of the matrix A is $K$, and therefore, $\Delta k=k''\times L$; and the leading dimension of the matrix B is $N$, and therefore, $\Delta n=n''\times L$, where $k''$ and $n''$ may be any positive integer.

Taking into account the contents described in (i) and (ii) above, following expressions for the search strides $\Delta m$, $\Delta k$, and $\Delta n$ in the $M$, $K$, and $N$ dimensions may be obtained.

In the case of row-major order, and when neither the matrix A nor the matrix B is transposed:

$$\Delta m = P_1 \times P_0;$$

$$\Delta k = scm(P_1 \times P_0 \times e_K, L);$$

$$\Delta n = scm(P_1 \times P_0 \times e_N, L).$$

In the case of row-major order, and when the matrix A is not transposed and the matrix B is transposed:

$$\Delta m = P_1 \times P_0;$$

$$\Delta k = scm(P_1 \times P_0 \times e_K, L);$$

$$\Delta n = P_1 \times P_0 \times e_N.$$

In the case of column-major order, and when neither the matrix A nor the matrix B is transposed:

$$\Delta m = scm(P_1 \times P_0, L);$$

$$\Delta k = scm(P_1 \times P_0 \times e_K, L);$$

$$\Delta n = P_1 \times P_0 \times e_N.$$

In the case of column-major order, and when the matrix A is not transposed and the matrix B is transposed:

$$\Delta m = scm(P_1 \times P_0, L);$$

$$\Delta k = P_1 \times P_0 \times e_K;$$

$$\Delta n = scm(P_1 \times P_0 \times e_N, \ L),$$

where

scm(a, b) means solving for the least common multiple of a and b.

Based on the above description, those skilled in the art may understand that in order to determine the search strides, matrix information of the present disclosure includes the number of master computing units participating in matrix multiplication (which may be used, for example, to determine a size of "$P_1$" value above), the number of computing sub-units in each of the master computing units (which may be used, for example, to determine a size of "$P_0$" value above), and a data size (such as the aforementioned "L" used to determine the search strides) of loading from the off-chip system (such as the "DDR") and achieving the highest bandwidth utilization. Based on this, in determining the search strides, the method of the present disclosure may include determining the search strides at least based on the number of the master computing units, the number of the computing sub-units, and the data size.

Further, as mentioned above, the determination of the search strides is also required to consider the storage format of the matrix and whether the matrix is transposed, so the matrix information of the present disclosure may also include storage formats of a first matrix and a second matrix in an off-chip system and transposition information about whether the matrix is transposed, where the storage formats include storage in row-major order or column-major order as described above. Based on this, in determining the search strides, the method of the present disclosure also includes: determining the search strides according to the storage formats and transposition information of the first matrix and the second matrix, which are the above search strides $\Delta m$, $\Delta k$, and $\Delta n$ respectively associated with the *M, K,* and *N* dimensions.

After acquiring the above search strides, the method of the present disclosure may search for optimal splitting coefficients $M_b$, $K_b$, and $N_b$ by adopting suitable search algorithms. The search algorithms may include, but are not limited to, a global search, a neighborhood search, a genetic algorithm, and other optimization algorithms.

For exemplary purposes only, the following shows that final matrix block splitting coefficients are acquired through the global search algorithm in the form of pseudo-code.

```
Global Search:
1 : Initialization : s⁰ = (M, K, N, Mᵦ = Δm, Kᵦ = Δk, Nᵦ = Δn);
2 :              cost_min = cost(s⁰);
3 : for M'ᵦ in range(Δm, Δm, M) do
4 :     for N'ᵦ in range(Δn, Δn, N) do
5 :         for K'ᵦ in range(Δk, Δk, K) do
6 :             s¹ = (M, K, N, M'ᵦ, K'ᵦ, N'ᵦ);
7 :             if s¹ ∈ U1 ∩ U2 and cost_min > cost(s¹) then
8 :                 s⁰ = s¹;
9 :                 cost_min = cost(s¹);
10 :            end if
11 :        end for
12 :    end for
13 : endfor
14 : Return: s⁰
```

Here, *U*1 in the above exemplary pseudo-code is a collection (which is the second search sub-space in the context of the present disclosure, as shown in the formula (8)) that satisfies restrictions of the L1 cache, and *U*2 is a collection (which is the first search sub-space in the context of the present disclosure, as shown in the formula (6)) that satisfies restrictions of the L2 cache.

The method for optimizing the matrix multiplication of the on-chip system of the present disclosure is described above in combination with FIGs. 1-5. By using the method of the present disclosure, optimal splitting coefficients for splitting a matrix may be determined. Thus, when the matrix is split by using the optimal splitting coefficients for the matrix multiplication, the cost in terms of data transmission (such as I/O overhead) is minimal. Based on this, a hardware platform that performs matrix multiplication will perform matrix multiplication in a more efficient and less computationally expensive way.

FIG. 6a and FIG. 6b are schematic diagrams of matrix block splitting principle according to embodiments of the present disclosure. As shown in the figure, and in combination with the above description, a size of one of matrix blocks $A_{ik}^{block}$ (as shown in the figure) obtained after splitting a first matrix of the present disclosure may be determined as ($M_b*K_b$) by using splitting coefficients determined by the optimization algorithm of the present disclosure. Similarly, a size of one of matrix blocks $B_{kj}^{block}$ (as shown in the figure) obtained after splitting a second matrix is ($K_b*N_b$), and then a size of one of matrix blocks $C_{ij}^{block}$ (as shown in the figure) obtained after splitting a result matrix is ($Mb*Nb$). According to cannon algorithm, $C_{ij,11}^{block}$ is used as an example, which equals " $A_{ik,11}^{block} \times B_{kj,11}^{block} + A_{ik,12}^{block} \times B_{kj,21}^{block}$ ", where $A_{ik,11}^{block}$ and $A_{ik,12}^{block}$ are two matrix sub-blocks obtained after splitting the matrix block $A_{ik}^{block}$ described above, and $B_{kj,11}^{block}$ and $B_{kj,21}^{block}$ are two matrix sub-blocks obtained after splitting the matrix block $B_{kj}^{block}$ .

As mentioned above, the above matrix sub-blocks may be further split, so that matrix multiplication of two matrix sub-blocks (such as " $A_{ik,ef}^{block} \times B_{kj,fg}^{block}$ ") is converted to matrix multiplication of four atomic matrices. For example, as shown in FIG. 6b, after further splitting, each matrix sub-block (such as " $A_{ik,11}^{block}$ ") in the $A_{ik}^{block}$ matrix may be split into four atomic matrices in the $A_{ik,ef}^{block}$ matrix which are $A_{ik,ef,11}^{block}$, $A_{ik,ef,12}^{block}$, $A_{ik,ef,21}^{block}$ and $A_{ik,ef,22}^{block}$ in the figure. The same splitting situation applies to $B_{kj}^{block}$ and $C_{ij}^{block}$ , which is not repeated here.

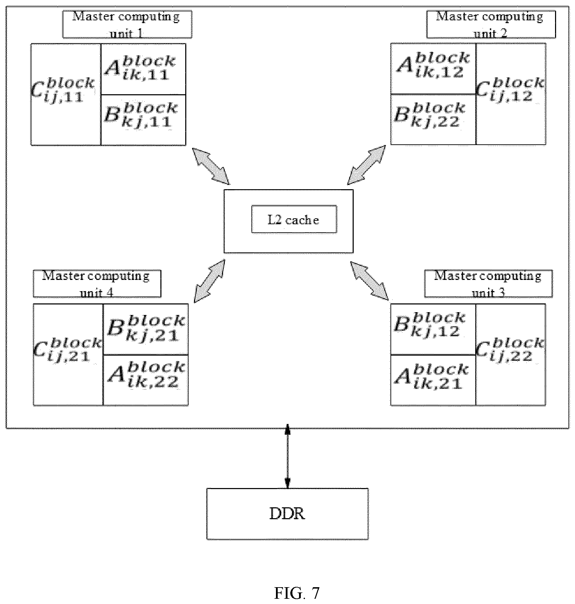

FIG. 7 is a structural block diagram of an on-chip system according to an embodiment of the present disclosure. As shown in FIG. 7, this on-chip system includes a plurality of master computing units, such as master computing units 1-4 shown in the figure. The L2 cache further shown is shared by the plurality of master computing units described above. As previously described in conjunction with FIG. 4, this L2 cache is configured with a high-speed buffer for loading matrix data from an off-chip system (such as the DDR shown in FIG. 7), a high-speed buffer for transferring data between adjacent master computing units, and a high-speed buffer for matrix multiplication.

For illustrative purposes only, the figure takes cannon algorithm for matrix multiplication as an example to show matrix sub-blocks loaded at each master computing unit. For example, a master computing unit 1 loads $A_{ik,11}^{block}$ and $B_{kj,11}^{block}$ from the DDR via the L2 cache, a master computing unit 2 loads $A_{ik,12}^{block}$ and $B_{kj,22}^{block}$ from the DDR via the L2 cache, and so on, to perform a first matrix multiplication operation, such as $A_{ik,11}^{block} \times B_{kj,11}^{block}$ . In performing matrix multiplication, the master computing unit may also receive matrix sub-blocks from adjacent master computing units to further perform matrix multiplication, thus obtaining corresponding matrix sub-blocks as intermediate results (such as $C_{ij,11}^{block}$ described above). For example, the master computing unit 1 may receive $A_{ik,12}^{block}$ from the master computing unit 2 and receive $B_{kj,21}^{block}$ from the master computing unit 4 to perform a second matrix multiplication operation, such as $A_{ik,12}^{block} \times B_{kj,21}^{block}$ , according to cannon algorithm. Similarly, the master computing unit 3 may receive $B_{kj,22}^{block}$ from the master computing unit 2 and receive $A_{ik,22}^{block}$ from the master computing unit 4, to perform the second matrix multiplication operation according to cannon algorithm. After two matrix multiplication operations mentioned above, by adding two intermediate results obtained, each master computing unit may obtain a corresponding result matrix sub-block. For example, the master computing unit 1 obtains a result matrix sub-block $C_{ij,11}^{block}$ by computing, the master computing unit 2 obtains a result matrix sub-block $C_{ij,12}^{block}$ by computing, and so on.

FIG. 8 is a schematic diagram where a computing sub-unit performs matrix multiplication according to an embodiment of the present disclosure. As mentioned above, in a hardware architecture that supports the optimization solution disclosed herein, each master computing unit in FIG. 7 may include a plurality of computing sub-units that perform matrix multiplication in parallel, such as four computing sub-unit shown in FIG. 8, including computing sub-units 1-4. Further, each computing sub-unit may acquire atomic matrices required for matrix multiplication from a L1 cache, where the atomic matrices are minimum matrix units for matrix multiplication supported by the computing sub-unit.

As described above in conjunction with FIG. 7, each master computing unit is required to complete matrix multiplication twice when acquiring a corresponding result matrix sub-block, where each matrix multiplication operation includes a first round of computing and a second round of computing performed by four computing sub-units shown in FIG. 8. As shown in FIG. 8, in the first round of computing, the computing sub-unit 1 acquires $A^{block}_{ik,ef,11}$ and $B^{block}_{kj,fg,11}$ from the L1 cache to perform matrix multiplication. Next, in the second round of computing, the computing sub-unit 1 acquires $A^{block}_{ik,ef,12}$ and $B^{block}_{kj,fg,21}$ from the L1 cache to perform matrix multiplication. Finally, by adding intermediate results $C^{block}_{ij,eg,11}$ of two rounds of computing, intermediate result of matrix multiplication of the atomic matrices performed by the computing sub-unit 1 are obtained. A similar situation applies to the computing sub-units 2~4, which is not repeated here.

The optimization solution and application in combination with the hardware architecture of the present disclosure are detailed above in combination with drawings, and then the following will discuss an algorithm selection solution of the present disclosure. Here, the algorithm selection solution is to select an optimal algorithm from a plurality of matrix multiplication algorithms suitable for matrix multiplication to perform matrix multiplication. In an implementation, different search space may be set up by using different splitting methods on the on-chip system, thus finally obtaining different matrix multiplication algorithms. For example, when a splitting operation is performed at the computing sub-unit level, matrix sub-blocks of a first matrix may be split only( for example, in the $M$ row direction), and matrix sub-blocks of a second matrix may not be split, thus obtaining corresponding search space and finally forming a new matrix multiplication algorithm. Similarly, the matrix sub-blocks of the second matrix may be split (for example, in the $N$ column direction), and the matrix sub-blocks of the first matrix may not be split, thus forming another new matrix multiplication algorithm. It may be known that the two matrix multiplication algorithms obtained above do not perform splitting at the computing sub-unit level in the $K$ direction (column direction for the first matrix and row direction for the second matrix).

When there are a plurality of candidate matrix multiplication algorithms that implement matrix multiplication similar to the above, since the number of these algorithms is finite, finite algorithm space $F=\{f_0, f_1, f_2, ......, f_n\}$ may be formed. Next, a global optimization goal may be set as the following in the algorithm space:

$$\min_{f_i \subset F}[cost(f_i, M, K, N;\ M_b, K_b, N_b)]$$

(16), where

$M, K, N, M_b, K_b,$ and $N_b$ have the same meaning as corresponding terms in the previous expressions (such as the formula (2)).

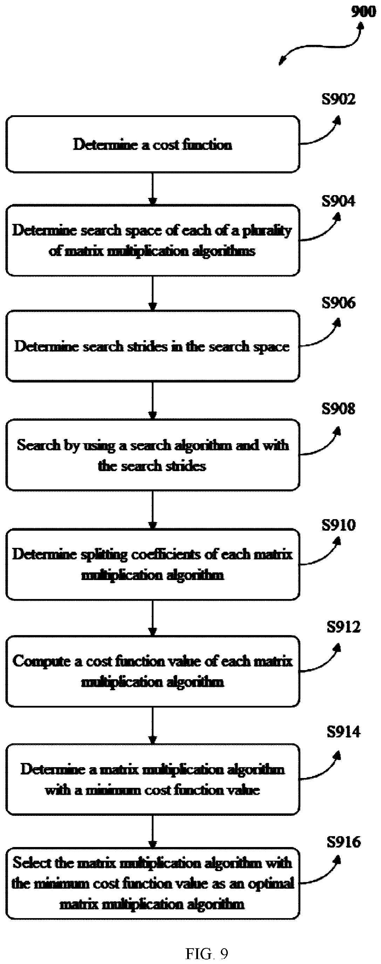

Based on the above scenario, the following details how to select an optimal matrix multiplication algorithm in combination with FIG. 9.

FIG. 9 is a flowchart of a method 900 for selecting an optimal matrix multiplication algorithm according to an embodiment of the present disclosure. As shown in FIG. 9, in step S902, a cost function is determined, where the determination method for the cost function may be the method described above in combination with FIG. 2, which is not repeated here. As an example, the following cost function may be determined:

$$cost(f_i, M, K, N;\ M_b, K_b, N_b) = \left\lceil \frac{M}{M_b} \right\rceil \times B_{size} \times \gamma(ldb_b) + \left\lceil \frac{N}{N_b} \right\rceil \times A_{size} \times \gamma(lda_b)$$

(17).

Similar to the formula (16), symbols in the formula (17) have the same meaning as those in the previous expressions (such as formula (5)).

Next, in step S904, search space of each matrix multiplication algorithm in a plurality of matrix multiplication algorithms (which are the above plurality of "candidate algorithms") is determined, and in step S906, search strides of the search space are determined. The determination methods for the search space and the search strides may refer to the aforementioned description and will not be repeated here. Next, in step S908, search is performed by using a search algorithm (such as the above global search, neighborhood search, or genetic algorithm) and at the determined search strides, thus, in step S910, determining splitting coefficients corresponding to each matrix multiplication algorithm (such as splitting coefficients $M_{bi}$, $K_{bi}$, and $N_{bi}$ for an i-th algorithm). Next, in step S912, a cost function value of each matrix multiplication algorithm is computed, and in step S914, a matrix multiplication algorithm with a minimum cost function value is determined. Therefore, in step S916, the matrix multiplication algorithm with the minimum cost function value is selected as an optimal matrix multiplication algorithm, and corresponding splitting coefficients of the matrix multiplication algorithm are used to implement multiple levels of splitting on large matrices.

Through the above algorithm selection solution of the present disclosure, an optimal algorithm may be selected from a plurality of algorithms for matrix multiplication. The selected algorithm may implement multiplication of large matrices with minimum operation cost, thus improving operation efficiency of matrix multiplication and reducing computing cost. Further, when the above optimal algorithm is used to perform matrix multiplication on the on-chip system, resource usage of the on-chip system is maximized, thus taking full advantage of computing power of the on-chip system.

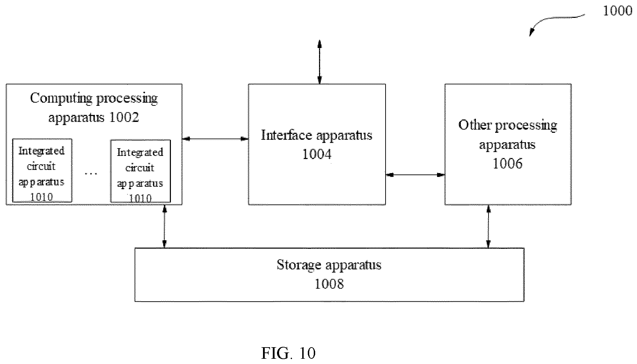

FIG. 10 is a structural diagram of a combined processing apparatus 1000 according to an embodiment of the present disclosure. As shown in FIG. 10, the combined processing apparatus 1000 includes a computing processing apparatus 1002, an interface apparatus 1004, other processing apparatus 1006, and a storage apparatus 1008. According to different application scenarios, the computing processing apparatus may include one or a plurality of integrated circuit apparatuses 1010. The integrated circuit apparatus may include the on-chip system described in the context of the present disclosure, and the on-chip system is configured to perform matrix multiplication between matrices. In an implementation scenario, the matrices may be large matrices or super-large matrices. Further, through the optimization solution discussed in the context of the present disclosure, the above large matrices or super-large matrices (such as the first matrix or second matrix described above) may be split based on splitting coefficients, thus obtaining matrix blocks suitable for matrix multiplication performed by the on-chip system.

In different embodiments, the computing processing apparatus of the present disclosure may be configured to perform an operation specified by a user, such as matrix multiplication of the present disclosure. In an exemplary application, the computing processing apparatus may be implemented as (or may include) a single-core artificial intelligence processor or a multi-core artificial intelligence processor. Similarly, one or a plurality of computing apparatuses included in the computing processing apparatus may be implemented as an artificial intelligence processor core or a partial hardware structure of the artificial intelligence processor core. If the plurality of computing apparatuses are implemented as artificial intelligence processor cores or partial hardware structures of the artificial intelligence processor cores, the computing processing apparatus of the present disclosure may be regarded as having a single-core structure or an isomorphic multi-core structure.

In an exemplary operation, the computing processing apparatus of the present disclosure may interact with other processing apparatus through the interface apparatus, so as to jointly complete the operation specified by the user. According to different implementations, other processing apparatuses of the present disclosure may include one or more types of general and/or dedicated processors, including a central processing unit (CPU), a graphics processing unit (GPU), an artificial intelligence processor, and the like. These processors include but are not limited to a digital signal processor (DSP), an application specific integrated circuit (ASIC), a field-programmable gate array (FPGA), or other programmable logic components, discrete gate or transistor logic components, discrete hardware components, and the like. Moreover, the number of the processors may be determined according to actual requirements. As described above, with respect to the computing processing apparatus of the present disclosure only, the computing processing apparatus of the present disclosure may be regarded as having the single-core structure or the isomorphic multi-core structure. However, when the computing processing apparatus and other processing apparatus are considered together, both the computing processing apparatus and other processing apparatus may be regarded as forming a heterogeneous multi-core structure.

In one or a plurality of embodiments, other processing apparatus may serve as an interface between the computing processing apparatus (which may be embodied as an artificial intelligence operation apparatus such as a neural network operation apparatus) of the present disclosure and external data and controls. Other processing apparatus may perform basic controls that include but are not limited to moving data, and starting and/or stopping the computing apparatus. In other embodiments, other processing apparatus may also cooperate with the computing processing apparatus to jointly complete an operation task.

In one or a plurality of embodiments, the interface apparatus may be used to transfer data and a control instruction between the computing processing apparatus and other processing apparatus. For example, the computing processing apparatus may acquire input data from other processing apparatus via the interface apparatus and write the input data to an on-chip storage apparatus (or called a memory) of the computing processing apparatus. Further, the computing processing apparatus may acquire the control instruction from other processing apparatus via the interface apparatus and write the control instruction to an on-chip control cache of the computing processing apparatus. Alternatively or optionally, the interface apparatus may further read data in the storage apparatus of the computing processing apparatus and then transfer the data to other processing apparatus. Additionally or optionally, the combined processing apparatus of the present disclosure may further include a storage apparatus. As shown in the figure, the storage apparatus is connected to the computing processing apparatus and other processing apparatus, respectively. In one or a plurality of embodiments, the storage apparatus may be used to save data of the computing processing apparatus and/or other processing apparatus. For example, the data may be data that may not be fully saved in the internal or the on-chip storage apparatus of the computing processing apparatus or other processing apparatus.

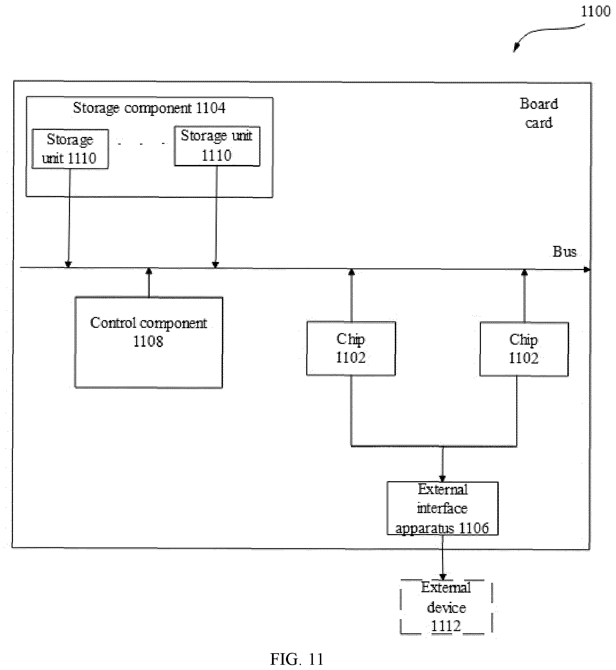

In some embodiments, the present disclosure also discloses a chip (such as a chip 1102 shown in FIG. 11). In an embodiment, the chip is a system-on-chip (SoC) and integrates one or a plurality of combined processing apparatuses shown in FIG. 10 and may be configured to perform matrix multiplication between matrix blocks. The chip may be connected to other related components through an external interface apparatus (such as an external interface apparatus 1106 shown in FIG. 11). The related components may be, for example, a camera, a monitor, a mouse, a keyboard, a network card, or a WIFI interface. In some application scenarios, the chip may integrate other processing units (such as a video codec) and/or an interface unit (such as a dynamic random access memory (DRAM) interface), and the like. In some embodiments, the present disclosure also discloses a chip package structure, including the chip. In some embodiments, the present disclosure discloses a board card, including the chip package structure. The board card will be described in detail in combination with FIG. 11 below.

FIG. 11 is a schematic structural diagram of a board card 1100 according to an embodiment of the present disclosure. As shown in FIG. 11, the board card includes a storage component 1104 used for storing data. The storage component 1604 includes one or a plurality of storage units 1110. The storage component may be connected to and may transfer data to a control component 1108 and the chip 1102 through a bus. Further, the board card further includes an external interface apparatus 1106, which is configured to implement data relay or transfer between the chip (or the chip in the chip package structure) and an external device 1112 (such as a server or a computer, and the like). For example, to-be-processed data may be transferred from the external device to the chip through the external interface apparatus. For another example, a computing result of the chip may still be sent back to the external device through the external interface apparatus. According to different application scenarios, the external interface apparatus may have different interface forms. For example, the external interface apparatus may adopt a standard peripheral component interface express (PCIe) interface. In one or a plurality of embodiments, the control component in the board card of the present disclosure may be configured to regulate and control a state of the chip. As such, in an application scenario, the control component may include a micro controller unit (MCU), which may be used to regulate and control a working state of the chip.

According to the above descriptions in combination with FIG. 10 and FIG. 11, those skilled in the art may understand that the present disclosure also discloses an electronic device or apparatus. The electronic device or apparatus may include one or a plurality of the board cards, one or a plurality of the chips, and/or one or a plurality of the combined processing apparatuses. In an implementation scenario, the electronic device or apparatus may be configured to perform matrix multiplication discussed in the context of the present disclosure and matrix data participating in the matrix multiplication is a matrix block obtained after splitting based on optimal splitting coefficients disclosed herein.

According to different application scenarios, an electronic device or apparatus of the present disclosure may include a server, a cloud server, a server cluster, a data processing apparatus, a robot, a computer, a printer, a scanner, a tablet, a smart terminal, a PC device, an Internet of Things terminal, a mobile terminal, a mobile phone, a traffic recorder, a navigator, a sensor, a webcam, a camera, a video camera, a projector, a watch, a headphone, a mobile storage, a wearable device, a visual terminal, an autonomous driving terminal, a vehicle, a household appliance, and/or a medical device. The vehicle includes an airplane, a ship, and/or a car; the household appliance includes a television, an air conditioner, a microwave oven, a refrigerator, an electric rice cooker, a humidifier, a washing machine, an electric lamp, a gas cooker, and a range hood; and the medical device includes a nuclear magnetic resonance spectrometer, a B-ultrasonic scanner, and/or an electrocardiograph. The electronic device or apparatus of the present disclosure may be further applied to Internet, Internet of Things, data center, energy, transportation, public management, manufacturing, education, power grid, telecommunications, finance, retail, construction sites, medical, and other fields.

Further, the electronic device or apparatus of the present disclosure may be further used in application scenarios including cloud, edge, and terminal related to artificial intelligence, big data, and/or cloud computing. In one or a plurality of embodiments, according to the solution of the present disclosure, an electronic device or apparatus with high computing power may be applied to a cloud device (such as the cloud server), while an electronic device or apparatus with low power consumption may be applied to a terminal device and/or an edge device (such as a smart phone or the webcam). In one or a plurality of embodiments, hardware information of the cloud device is compatible with that of the terminal device and/or the edge device. As such, according to the hardware information of the terminal device and/or the edge device, appropriate hardware resources may be matched from hardware resources of the cloud device to simulate hardware resources of the terminal device and/or the edge device to complete unified management, scheduling, and collaborative work of terminal-cloud integration or cloud-edge-terminal integration.

It is required to be explained that, for the sake of brevity, the present disclosure describes some method embodiments as a series of actions and combinations thereof, but those skilled in the art may understand that the solution of the present disclosure is not limited by an order of actions described. Therefore, according to the present disclosure or under the teaching of the present disclosure, those skilled in the art may understand that some steps of the method embodiments may be performed in a different order or simultaneously. Further, those skilled in the art may understand that the embodiments described in the present disclosure may be regarded as optional embodiments; in other words, actions and units involved thereof are not necessarily required for the implementation of a certain solution or some solutions of the present disclosure. Additionally, according to different solutions, descriptions of some embodiments of the present disclosure have their own emphases. In view of this, those skilled in the art may understand that, for a part that is not described in detail in a certain embodiment of the present disclosure, reference may be made to related descriptions in other embodiments.

In terms of specific implementations, according to the present disclosure and under the teaching of the present disclosure, those skilled in the art may understand that several embodiments disclosed in the present disclosure may be implemented in other ways that are not disclosed in the present disclosure. For example, for units in the electronic device or apparatus embodiment, the present disclosure divides the units on the basis of considering logical functions, but there may be other division methods during actual implementations. For another example, a plurality of units or components may be combined or integrated into another system, or some features or functions in the units or components may be selectively disabled. With respect to a connection between different units or components, the connection discussed above in combination with drawings may be direct or indirect coupling between the units or components. In some scenarios, the direct or indirect coupling involves a communication connection using an interface. The communication interface may support electrical, optical, acoustic, magnetic, or other forms of signal transmission.

In the present disclosure, units described as separate components may be or may not be physically separated. Components shown as units may be or may not be physical units. The components or units may be located in a same position or distributed to a plurality of network units. Additionally, according to actual requirements, some or all of the units may be selected for achieving the purpose of the solution described in the embodiments of the present disclosure. Additionally, in some scenarios, the plurality of units in the embodiments of the present disclosure may be integrated into one unit, or each of the units may be physically separated.

In some implementation scenarios, the integrated unit may be implemented in the form of a software program unit. If the integrated unit is implemented in the form of the software program unit and sold or used as an independent product, the integrated unit may be stored in a computer-readable memory. Based on this, when the solution of the present disclosure is embodied in the form of a software product (such as a computer-readable storage medium), the software product may be stored in a memory. The software product may include several instructions used to enable a computer device (which may be a personal computer, a server, or a network device, and the like) to perform part or all of steps of the method of the embodiments of the present disclosure. The memory includes but is not limited to an USB, a flash disk, a read only memory (ROM), a random access memory (RAM), a mobile hard disk, a magnetic disk, or an optical disc, and other media that may store a program code.

In some other implementation scenarios, the integrated unit may be implemented in the form of hardware. The hardware may be a specific hardware circuit, which may include a digital circuit and/or an analog circuit, and the like. A physical implementation of a hardware structure of the circuit includes but is not limited to a physical component. The physical component includes but is not limited to a transistor, or a memristor, and the like. In view of this, various apparatuses (such as the computing apparatus or other processing apparatus) described in the present disclosure may be implemented by an appropriate hardware processor, such as a central processing unit (CPU), a graphics processing unit (GPU), a field-programmable gate array (FPGA), a digital signal processor (DSP), and an application-specific integrated circuit (ASIC), and the like. Further, the storage unit or the storage apparatus may be any appropriate storage medium (including a magnetic storage medium or a magneto-optical storage medium), such as a resistive random access memory (RRAM), a dynamic random access memory (DRAM), a static random access memory (SRAM), an enhanced dynamic random access memory (EDRAM), a high bandwidth memory (HBM), a hybrid memory cube (HMC), the ROM, and the RAM, and the like.

It should also be understood that any module, unit, component, server, computer, terminal or device performing an instruction of the embodiment of the present disclosure may include or access a computer-readable medium in another way, such as a storage medium, a computer storage medium, or a data storage device (removable and/or non-removable) such as a disk, a compact disc, or a magnetic tape. The computer storage medium may include volatile and non-volatile, movable and immovable media implemented by any method or technology used to store information, such as a computer-readable instruction, a data structure, a program module, or other data.

It should be understood that terms such as "first", "second", "third", and "fourth" appear in the claims, specification, and drawings are used for distinguishing different objects rather than describing a specific order. It should be understood that terms "including" and "comprising" used in the specification and the claims indicate the presence of a feature, an entity, a step, an operation, an element, and/or a component, but do not exclude the existence or addition of one or more of other features, entities, steps, operations, elements, components, and/or collections thereof.

It should also be understood that terms used in the specification of the present disclosure are merely intended to describe a specific embodiment rather than to limit the present disclosure. As being used in the specification and the claims of the present disclosure, unless the context clearly indicates otherwise, singular forms such as "a", "an", and "the" are intended to include plural forms. It should also be understood that a term "and/or" used in the specification and the claims refers to any and all possible combinations of one or more of relevant listed items and includes these combinations. As being used in the specification and the claims of the present disclosure, a term "if' may be interpreted as "when",  or "once" or "in response to a determination" or "in response to a case where something is detected" depending on the context. Similarly, depending on the context, a clause "if it is determined that" or "if [a described condition or event] is detected" may be interpreted as "once it is determined that", or "in response to a determination", or "once [a described condition or event] is detected", or "in response to a case where [a described condition or event] is detected".

Although the embodiments of the present disclosure are as above, the contents are only embodiments used to facilitate the understanding of the present disclosure, and are not intended to limit the scope and application scenarios of the present disclosure. Any skilled personnel in the technical field of the present disclosure may make any modification and change in the form and details of the embodiments without deviating from the spirit and scope disclosed by the present disclosure, but the scope of patent protection of the present disclosure shall still be defined in the scope of the attached claims.

**Claims**

1. A method for optimizing matrix multiplication of an on-chip system, wherein the method is implemented by one or a plurality of processors and comprises:

   receiving matrix information of a first matrix and a second matrix that are to be split to perform matrix multiplication, wherein the first matrix is $M$ rows $\times K$ columns, and the second matrix is $K$ rows $\times N$ columns; and

   determining splitting coefficients for splitting the first matrix and the second matrix by minimizing a cost function, wherein the splitting coefficients comprise a row count $M_b$ and a column count $K_b$ for matrix blocks obtained after splitting the first matrix and a row count $K_b$ and a column count $N_b$ for matrix blocks obtained after splitting the second matrix, wherein

   the cost function is used to determine the cost of transferring matrix data between the on-chip system and an off-chip system to perform the matrix multiplication on the on-chip system, wherein

   the cost function is at least based on a data size of the first matrix, a data size of the second matrix, a row count $M$ of the first matrix, a column count $N$ of the second matrix, and the splitting coefficients.

2. The method of claim 1, wherein the cost function is further based on a bandwidth utilization coefficient, wherein the bandwidth utilization coefficient equals to a ratio between an equivalent bandwidth when matrix blocks are loaded from the off-chip system at a predetermined data length and a total bandwidth between the on-chip system and the off-chip system.

3. The method of claim 1 or 2, wherein in determining the splitting coefficients by minimizing the cost function, the method comprises creating search space used for minimizing the cost function to determine the splitting coefficients by using the search space.

4. The method of claim 3, wherein creating the search space used for minimizing the cost function comprises:

   dividing a high-speed buffer of the on-chip system; and

   creating the search space according to a division result, wherein the high-speed buffer is configured to store split matrix blocks and matrix multiplication results obtained by performing matrix multiplication on the split matrix blocks.

5. The method of claim 4, wherein the on-chip system comprises multiple levels of caches, and the method comprises: creating search sub-space associated with each level of cache according to a predetermined matrix multiplication algorithm that is used to perform matrix multiplication.

6. The method of claim 5, wherein the multiple levels of caches comprise a first level of cache and a second level of cache, the search space comprises first search sub-space and second search sub-space, and the method comprises:

> creating the first search sub-space according to settings of a plurality of first high-speed buffers in the first level of cache, wherein the plurality of first high-speed buffers are configured to store matrix sub-blocks obtained by splitting the matrix blocks and intermediate operation results obtained by performing matrix multiplication on the matrix sub-blocks; and
> creating the second search sub-space according to settings of a plurality of second high-speed buffers in the second level of cache, wherein the plurality of second high-speed buffers are configured to store atomic matrices obtained by splitting the matrix sub-blocks and intermediate operation results obtained by performing matrix multiplication on the atomic matrices.

**7.** The method of claim 6, wherein determining the splitting coefficients by minimizing the cost function comprises:

> determining search strides used for searching the search space, wherein the search strides comprise search strides $\Delta m$, $\Delta k$, and $\Delta n$ respectively associated with $M$, $K$, and $N$ dimensions; and
> using a search algorithm to search in the search space with the search strides to determine $M_b$, $K_b$, and $N_b$ for minimizing the cost function.

**8.** The method of claim 7, wherein the matrix information comprises the number of master computing units participating in the matrix multiplication, the number of computing sub-units in each of the master computing units, and a data size of loading from the off-chip system and achieving the highest bandwidth utilization, and in determining the search strides, the method comprises:
determining the search strides at least based on the number of the master computing units, the number of the computing sub-units, and the data size.

**9.** The method of claim 8, wherein the matrix information further comprises storage formats of the first matrix and the second matrix in the off-chip system and transposition information about whether the matrix is transposed, wherein the storage formats comprise storage in row-major order or column-major order, and in determining the search strides, the method further comprises:
determining the search strides according to the storage formats and transposition information of the first matrix and the second matrix.

**10.** The method of claim 5, further comprising:

> obtaining a plurality of pieces of search space by using a plurality of candidate matrix multiplication algorithms;
> obtaining a cost function value associated with each of the candidate matrix multiplication algorithms according to the plurality of pieces of search spaces and the cost function; and
> by comparing a plurality of cost function values, selecting a candidate algorithm with a minimum cost function value from the plurality of candidate matrix multiplication algorithms as the predetermined matrix multiplication algorithm.

**11.** A device for optimizing matrix multiplication of an on-chip system, comprising:

> a processor; and
> a memory, on which a program instruction for optimizing matrix multiplication of an on-chip system is stored, wherein when the program instruction is performed by the processor, the device performs the method of any one of claims 1-10.

**12.** A computer-readable storage medium, on which a program instruction for optimizing matrix multiplication of an on-chip system is stored, wherein when the program instruction is performed by a processor, the method of any one of claims 1-10 is implemented.

**13.** An on-chip system for performing matrix multiplication, comprising:

> a plurality of master processing units, wherein each master processing unit comprises a plurality of processing sub-units, wherein each processing sub-unit is configured to perform corresponding matrix multiplication; and
> a plurality of caches, configured to cache matrix data that is to perform matrix multiplication and results associated with matrix multiplication, wherein

the on-chip system is configured to perform matrix multiplication between matrix blocks, and the matrix blocks are obtained by splitting a matrix according to splitting coefficients of the method of any one of claims 1-10.

**14.** An integrated circuit apparatus, comprising the on-chip system of claim 13.

**15.** A board card, comprising the integrated circuit apparatus of claim 14.

$$\begin{bmatrix} a_{11} & a_{12} & \cdots & a_{1,K} \\ a_{21} & a_{22} & \cdots & a_{2,K} \\ \vdots & \vdots & \ddots & \vdots \\ a_{M,1} & a_{M,2} & \cdots & a_{M,K} \end{bmatrix} \times \begin{bmatrix} b_{11} & b_{12} & \cdots & b_{1,N} \\ b_{21} & b_{22} & \cdots & b_{2,N} \\ \vdots & \vdots & \ddots & \vdots \\ b_{K,1} & b_{K,2} & \cdots & b_{K,N} \end{bmatrix} = \begin{bmatrix} \sum_j^K a_{1j}b_{j1} & \sum_j^K a_{1j}b_{j2} & \cdots & \sum_j^K a_{1j}b_{jN} \\ \sum_j^K a_{2j}b_{j1} & \sum_j^K a_{2j}b_{j2} & \cdots & \sum_j^K a_{2j}b_{jN} \\ \vdots & \vdots & \ddots & \vdots \\ \sum_j^K a_{Mj}b_{j1} & \sum_j^K a_{Mj}b_{j2} & \cdots & \sum_j^K a_{Mj}b_{jN} \end{bmatrix}$$

Matrix A     Matrix B     Matrix C

Split

A matrix block

B matrix block

$$\begin{bmatrix} A_{11} & A_{12} & \cdots & A_{1,K'} \\ A_{21} & A_{22} & \cdots & A_{2,K'} \\ \vdots & \vdots & \ddots & \vdots \\ A_{M',1} & A_{M',2} & \cdots & A_{M',K'} \end{bmatrix} \times \begin{bmatrix} B_{11} & B_{12} & \cdots & B_{1,N'} \\ B_{21} & B_{22} & \cdots & B_{2,N'} \\ \vdots & \vdots & \ddots & \vdots \\ B_{K',1} & B_{K',2} & \cdots & B_{K',N'} \end{bmatrix} = \begin{bmatrix} \sum_j^{K'} A_{1j}B_{j1} & \sum_j^{K'} A_{1j}B_{j2} & \cdots & \sum_j^{K'} A_{1j}B_{jN'} \\ \sum_j^{K'} A_{2j}B_{j1} & \sum_j^{K'} A_{2j}B_{j2} & \cdots & \sum_j^{K'} A_{2j}B_{jN'} \\ \vdots & \vdots & \ddots & \vdots \\ \sum_j^{K'} A_{M'j}B_{j1} & \sum_j^{K'} A_{M'j}B_{j2} & \cdots & \sum_j^{K'} A_{M'j}B_{jN'} \end{bmatrix}$$

Matrix A     Matrix B     Matrix C

FIG. 1

200

S202

Receive matrix information of a first matrix and a second matrix that are to be split to perform matrix multiplication

S204

Determine splitting coefficients for splitting the first matrix and the second matrix by minimizing a cost function

FIG. 2

FIG. 3

FIG. 4

FIG. 5

FIG. 6a

FIG. 6b

Master computing unit 1

$C_{ij,11}^{block}$ $A_{ik,11}^{block}$

$B_{kj,11}^{block}$

Master computing unit 2

$A_{ik,12}^{block}$ $C_{ij,12}^{block}$

$B_{kj,22}^{block}$

L2 cache

Master computing unit 4

$C_{ij,21}^{block}$ $B_{kj,21}^{block}$

$A_{ik,22}^{block}$

Master computing unit 3

$B_{kj,12}^{block}$ $C_{ij,22}^{block}$

$A_{ik,21}^{block}$

DDR

FIG. 7

## A first round of computing

**Computing sub-unit 1**

$C_{ij,eg,11}^{block}$ | $A_{ik,ef,11}^{block}$
$B_{kj,fg,11}^{block}$

**Computing sub-unit 2**

$C_{ij,eg,12}^{block}$ | $A_{ik,ef,12}^{block}$
$B_{kj,fg,22}^{block}$

**Computing sub-unit 4**

$C_{ij,eg,22}^{block}$ | $A_{ik,ef,21}^{block}$
$B_{kj,fg,12}^{block}$

**Computing sub-unit 3**

$C_{ij,eg,21}^{block}$ | $A_{ik,ef,22}^{block}$
$B_{kj,fg,21}^{block}$

$A_{ik,ef,11}^{block}$ | $A_{ik,ef,12}^{block}$
$A_{ik,ef,21}^{block}$ | $A_{ik,ef,22}^{block}$

$B_{kj,fg,11}^{block}$ | $B_{kj,fg,12}^{block}$
$B_{kj,fg,21}^{block}$ | $B_{kj,fg,22}^{block}$

**L1 cache**

## A second round of computing

**Computing sub-unit 1**

$C_{ij,eg,11}^{block}$ | $A_{ik,ef,12}^{block}$
$B_{kj,fg,21}^{block}$

**Computing sub-unit 2**

$C_{ij,eg,12}^{block}$ | $A_{ik,ef,11}^{block}$
$B_{kj,fg,12}^{block}$

**Computing sub-unit 4**

$C_{ij,eg,22}^{block}$ | $A_{ik,ef,22}^{block}$
$B_{kj,fg,22}^{block}$

**Computing sub-unit 3**

$C_{ij,eg,21}^{block}$ | $A_{ik,ef,21}^{block}$
$B_{kj,fg,11}^{block}$

FIG. 8

900

S902

Determine a cost function

S904

Determine search space of each of a plurality of matrix multiplication algorithms

S906

Determine search strides in the search space

S908

Search by using a search algorithm and with the search strides

S910

Determine splitting coefficients of each matrix multiplication algorithm

S912

Compute a cost function value of each matrix multiplication algorithm

S914

Determine a matrix multiplication algorithm with a minimum cost function value

S916

Select the matrix multiplication algorithm with the minimum cost function value as an optimal matrix multiplication algorithm

FIG. 9

1000

| Computing processing apparatus 1002 | | Interface apparatus 1004 | Other processing apparatus 1006 |

Computing processing apparatus 1002

Integrated circuit apparatus 1010  ...  Integrated circuit apparatus 1010

Interface apparatus 1004

Other processing apparatus 1006

Storage apparatus 1008

FIG. 10

1100

FIG. 11

## INTERNATIONAL SEARCH REPORT

| | International application No. |
|---|---|
| | **PCT/CN2022/086815** |

**A. CLASSIFICATION OF SUBJECT MATTER**

G06F 15/78(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 片内, 片上, 片外, 矩阵, 乘, 划分, 拆分, 子, 损失, 代价, 目标, 函数, in-chip, on-chip, off-chip, matrix, multiply, divide, split, sub, loss, cost, objective, function

**C. DOCUMENTS CONSIDERED TO BE RELEVANT**

| Category* | Citation of document, with indication, where appropriate, of the relevant passages | Relevant to claim No. |
|---|---|---|
| A | CN 102375721 A (LENOVO (BEIJING) LTD.) 14 March 2012 (2012-03-14) description, paragraphs 25-119 | 1-15 |
| A | CN 112541159 A (HUAWEI TECHNOLOGIES CO., LTD.) 23 March 2021 (2021-03-23) description, paragraphs 94-230 | 1-15 |
| A | CN 111191699 A (ARMY ENGINEERING UNIVERSITY OF PLA) 22 May 2020 (2020-05-22) entire document | 1-15 |
| A | US 2012316886 A1 (PISHEHVAR, R. et al.) 13 December 2012 (2012-12-13) entire document | 1-15 |

☐ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 June 2022** | **24 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/086815**

| Patent document cited in search report | | | Publication date (day/month/year) | Patent family member(s) | | | Publication date (day/month/year) |
|---|---|---|---|---|---|---|---|
| CN | 102375721 | A | 14 March 2012 | CN | 102375721 | B | 30 March 2016 |
| CN | 112541159 | A | 23 March 2021 | None | | | |
| CN | 111191699 | A | 22 May 2020 | None | | | |
| US | 2012316886 | A1 | 13 December 2012 | CA | 2779232 | A1 | 08 December 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021104141333